# FASCICULE DE BREVET EUROPEEN

(11) **EP 2 525 118 B1**
(45) Date de publication et mention de la délivrance du brevet: **09.12.2015**
(21) Numéro de dépôt: 12167503.7
(22) Date de dépôt: 10.05.2012
(51) Int. Cl.: F16H 1/16, B62D 5/04, F16H 55/26, F16H 37/04, F16H 55/22

(54) **Direction de véhicule automobile à assistance électrique**
Lenkung eines Kraftfahrzeugs mit elektrischer Assistenz
Electrically assisted motor vehicle steering

(30) Priorité: 19.05.2011 FR 1154355
(43) Date de publication de la demande: 21.11.2012
(73) Titulaire: Jtekt Europe, 69540 Irigny (FR)
(72) Inventeur: Plateret, Nicolas, 69630 CHAPONOST (FR); Lachaux, Vincent, 38550 LE PEAGE DE ROUSSILLON (FR)
(74) Mandataire: Chevalier, Renaud Philippe

(56) Documents cités:
- EP-A1- 1 591 346
- EP-A2- 1 375 960
- DE-A1-102008 034 325
- FR-A1- 2 256 089
- FR-A1- 2 515 764

## Description

La présente invention concerne, d'une manière générale, les systèmes de direction de véhicule automobile à assistance électrique. Plus particulièrement, cette invention s'intéresse à la structure d'un système de direction assistée électrique, dans lequel un réducteur mécanique à vis sans fin et roue tangente est intercalé entre le moteur électrique d'assistance et un pignon, lui-même en prise avec une crémaillère. Encore plus particulièrement, l'invention s'applique à un tel système de direction dans lequel un engrènement de type hélicoïdal est réalisé entre le pignon et la crémaillère.

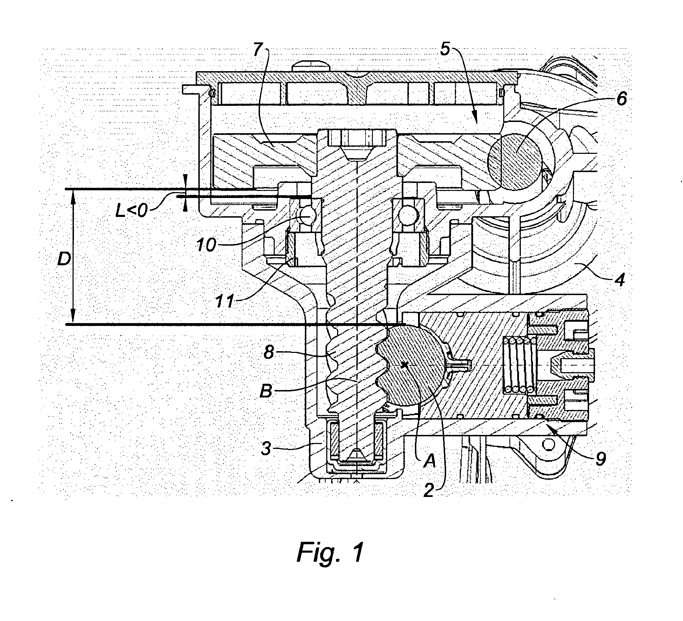

La figure 1 du dessin schématique annexé est une vue en coupe d'une direction assistée électrique, la coupe passant par un plan perpendiculaire à l'axe longitudinal A d'une crémaillère 2, logée et montée coulissante dans un carter de direction 3. Un moteur électrique d'assistance 4, à deux sens de rotation, est accouplé à un réducteur mécanique 5 à vis sans fin 6 et roue tangente 7. La vis sans fin 6 est accouplée à l'arbre du moteur électrique d'assistance 4, tandis que la roue tangente 7, en prise par sa denture périphérique avec la vis sans fin 6, possède un moyeu central lié axialement et en rotation avec un pignon 8 à denture hélicoïdale, monté tournant autour d'un axe B. Le pignon 8 est en prise avec une denture correspondante de la crémaillère 2. Un dispositif de poussoir 9 exerce un effort de pression sur le dos de la crémaillère 2, à l'opposé du pignon 8.

La structure du réducteur mécanique 5 et son encombrement sont conditionnés par l'angle de croisement du pignon 8 et de la crémaillère 2, par l'entraxe entre le pignon 8 et la crémaillère 2 c'est-à-dire la distance entre les deux axes A et B, et par le diamètre de la crémaillère 2.

Le document de brevet EP 1 591 346 A1 donne un exemple de direction assistée électrique selon l'état de la technique, ce document servant de base au préambule de la revendication 1. Dans le cas de ce document, la roue tangente du réducteur mécanique est de forme plate, en disque, et se situe dans un plan commun avec le vis sans fin.

La crémaillère 2 peut être rendue plus compacte en lui donnant une configuration spéciale, telle que décrite dans la demande de brevet français antérieure n°11.53863 déposée le 05 mai 2011 au nom du Demandeur.

Par contre, tel que réalisé actuellement avec en empilement de la roue tangente 7, d'un roulement 10 et d'une vis de serrage 11, le réducteur mécanique 5 reste très encombrant dans la direction de l'axe B. L'encombrement du réducteur mécanique 5 peut ici être notamment caractérisé par :
- la distance D, mesurée dans la direction de l'axe B, entre le flanc supérieur de la crémaillère 2 et la face inférieure de la roue tangente 7,
- la distance L, elle-aussi mesurée dans la direction de l'axe B, entre la face inférieure de la roue tangente 7 et la face supérieure du roulement 10 (cette distance L étant considérée ici comme « négative », c'est-à-dire que la face supérieure du roulement se situe plus bas que la face inférieure de la roue tangente).

La présente invention vise à éviter cet inconvénient, et elle a donc pour but de réduire l'encombrement du réducteur mécanique, dans un système de direction assistée électrique du genre ici considéré.

A cet effet, l'invention a pour objet un système de direction de véhicule automobile à assistance électrique, dans lequel un réducteur mécanique à vis sans fin et roue tangente est intercalé entre un moteur électrique d'assistance et un pignon, lui-même en prise avec une crémaillère, la roue tangente possédant une denture périphérique en prise avec la vis sans fin et un moyeu central lié axialement et en rotation avec le pignon, le système de direction étant caractérisé par le fait que la roue tangente du réducteur mécanique possède une forme en cloche, son moyeu central étant décalé axialement par rapport à sa denture périphérique, du côté opposé à la crémaillère.

Dans une forme de réalisation préférée de l'invention, un roulement servant de palier de guidage en rotation pour le pignon est logé au moins partiellement à l'intérieur du volume délimité par la roue tangente en forme de cloche.

Avantageusement, une vis ou un écrou de maintien du roulement est également logé à l'intérieur du volume délimité par la roue tangente en forme de cloche.

Grâce à une telle configuration de la roue tangente, et à l'imbrication de composants permise par cette configuration, on réduit de façon significative l'encombrement du réducteur mécanique, et par conséquent l'encombrement du système de direction ainsi que la masse totale de ce système.

On notera aussi que la solution objet de l'invention reste simple et économique, la configuration particulière en cloche de la roue tangente pouvant être obtenue, selon la matière constitutive de cette roue :
- par moulage ou surmoulage d'une matière plastique,
- par emboutissage d'une tôle métallique,
- par usinage d'une pièce en acier.

L'invention sera mieux comprise à l'aide de la description qui suit, en référence au dessin schématique annexé représentant, à titre d'exemple, une forme d'exécution de ce système de direction assistée.
Figure 1 (déjà mentionnée) est une vue en coupe d'un système de direction selon l'état de la technique,
Figure 2 est une vue en coupe d'un système de direction conforme la présente invention.

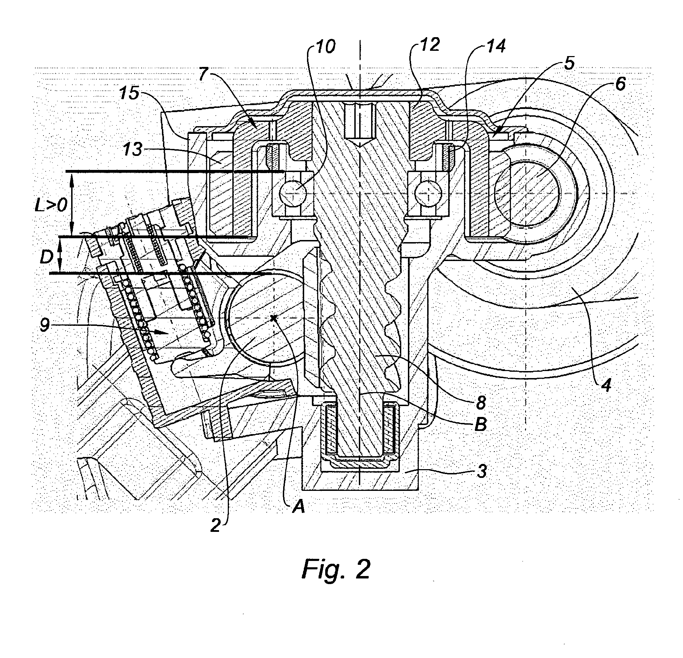

Sur la figure 2, relative à un système de direction assistée électrique conforme à l'invention, les éléments correspondant à ceux déjà décrits en référence à la figure 1 sont désignés par les mêmes références. On s'intéresse ici, plus particulièrement, à la configuration de la roue tangente 7, appartenant à un réducteur mécanique 5 intercalé entre le moteur électrique d"assistance 4 et le pignon 8, lui-même en prise avec la crémaillère 2.

La roue tangente 7 possède une forme en cloche, c'est-à-dire que son moyeu central 12 est décalé axialement par rapport à sa denture périphérique 13, en prise avec la vis sans fin 6. Le moyeu central 12 est lié axialement et en rotation avec le pignon 8, à l'extrémité de ce pignon 8 opposée à la crémaillère 2.

Par sa forme en cloche, la roue tangente 7 délimite un volume intérieur de forme générale cylindrique. Dans ce volume sont logés le roulement 10 servant de palier de guidage en rotation pour le pignon 8, ainsi qu'un écrou 14 de maintien du roulement 10.Une telle imbrication de plusieurs composants permet de réduire de façon significative l'encombrement du réducteur mécanique 5, dans la direction de l'axe B du pignon 8.

Pour quantifier le gain d'encombrement ainsi obtenu, on notera en particulier la réduction significative de la distance D, mesurée dans la direction de l'axe B, entre le flanc supérieur de la crémaillère 2 et la face inférieure de la roue tangente 7.

Dans le même ordre d'idées, on notera aussi que la distance L, mesurée entre la face inférieure de la roue tangente 7 et la face supérieure du roulement 10, est ici « positive » c'est dire que la face supérieure du roulement 10 se situe plus haut que la face inférieure de la roue tangente 7.

En conséquence de la réduction d'encombrement du réducteur mécanisme 5 à roue tangente 7, on obtient aussi une réduction de hauteur et de poids de la partie de carter 15 entourant le réducteur mécanique 5, comme le montre la comparaison des figures 1 et 2.

Dans une variante non illustrée directement, la vis ou l'écrou de maintien du roulement pourrait se situer de l'autre côté du roulement (comme illustré par la figure 1) auquel cas cette vis ou cet écrou ne serait plus logé dans le volume délimité par la roue tangente en forme de cloche, ou ne le serait que partiellement.

On ne s'éloignerait pas du cadre de l'invention, telle que définie dans les revendications annexées:
- en modifiant le détail des formes de la roue tangente, ou en réalisant cette roue par tout procédé de fabrication ou de formage,
- en destinant l'invention à des systèmes de direction assistée électrique de tous types, par exemple des directions à poussoir classique (figure 1) ou à poussoir dit « à excentrique » (figure 2).

## Revendications

1. Système de direction de véhicule automobile à assistance électrique, dans lequel un réducteur mécanique (5) à vis sans fin (6) et roue tangente (7) est intercalé entre un moteur électrique d'assistance (4) et un pignon (8), lui-même en prise avec une crémaillère (2), la roue tangente (7) possédant une denture périphérique (13) en prise avec la vis sans fin (6) et un moyeu central (12) lié axialement et en rotation avec le pignon (8), **caractérisé en ce que** la roue tangente (7) possède une forme en cloche, son moyeu central (12) étant décalé axialement par rapport à sa denture périphérique (13), du côté opposé à la crémaillère (2).

2. Système de direction selon la revendication 1, **caractérisé en ce qu'**un roulement (10) servant de palier de guidage en rotation pour le pignon (8) est logé au moins partiellement à l'intérieur du volume délimité par la roue tangente (7) en forme de cloche.

3. Système de direction selon la revendication 2, **caractérisé en ce qu'**une vis ou un écrou (14) de maintien du roulement (10) est également logé à l'intérieur du volume délimité par la roue tangente (7) en forme de cloche.

## Patentansprüche

1. Lenksystem eines Kraftfahrzeugs mit elektrischer Unterstützung, wobei ein mechanisches Getriebe (5) mit Endlosschnecke (6) und Schneckenrad (7) zwischen einem elektrischen Hilfsmotor (4) und einem Ritzel (8) angeordnet ist, das selbst wiederum in eine Gewindestange (2) eingreift, wobei das Schneckenrad (7) eine umlaufende Verzahnung (13) umfasst, die in die Endlosschnecke (6) eingreift und eine zentrale Nabe (12), die axial und drehbar mit dem Ritzel (8) verbunden ist, **dadurch gekennzeichnet, dass** das Schneckenrad (7) eine Glockenform aufweist, und seine zentrale Nabe (12) axial im Verhältnis zu seiner umlaufenden Verzahnung (13) auf die Seite gegenüber der Gewindestange (2) versetzt ist.

2. Lenksystem nach Anspruch 1, **dadurch gekennzeichnet, dass** ein Lager (10), das als drehbares Führungslager für das Ritzel (8) dient, zumindest teilweise im Inneren des Volumens angeordnet ist, das durch das glockenförmige Schneckenrad (7) begrenzt wird.

3. Lenksystem nach Anspruch 2, **dadurch gekennzeichnet, dass** eine Schraube oder eine Mutter (14) zum Festhalten des Lagers (10) ebenfalls im Inneren des Volumens angeordnet ist, das durch das glockenförmige Schneckenrad (7) begrenzt wird.

## Claims

1. An electric power-assisted steering system for motor vehicle, wherein a mechanical reducer (5) with a worm screw (6) and a worm wheel (7) is interposed between an electric assist motor (4) and a pinion gear (8), in turn engaged with a rack (2), the worm wheel (7) having a peripheral toothing (13) engaged with the worm screw (6) and a central hub (12) axially and rotatably connected with the pinion gear (8), **characterized in that** the worm wheel (7) is bell-like shaped, its central hub (12) being axially shifted with respect to its peripheral toothing (13), at the side opposite to the rack (2).

2. The steering system according to claim 1, **characterized in that** a rolling (10), serving as a rotating guide bearing for the pinion gear (8), is housed at least partially inside the volume delimited by the bell-like shaped worm wheel (7).

3. The steering system according to claim 2, **characterized in that** a screw or a nut (14) for maintaining the rolling (10) is also housed inside the volume delimited by the bell-like shaped worm wheel (7).
